# EUROPÄISCHE PATENTSCHRIFT

(11) **EP 1 236 909 B1**
(45) Veröffentlichungstag und Bekanntmachung des Hinweises auf die Patenterteilung: **03.11.2004**
(21) Anmeldenummer: 02003304.9
(22) Anmeldetag: 13.02.2002
(51) Int. Cl.: F15B 1/24

(54) **Druckmittelspeicher, insbesondere für eine hydraulische Bremsanlage eines Fahrzeugs, und Verfahren zum Montieren eines Druckmittelspeichers**
Fluid pressure accumulator, in particular for a hydraulic brake system of a vehicle, and method of assembling said accumulator
Accumulateur de pression à fluide, en particulier pour un système hydraulique de freinage d'un véhicule, et méthode d'assemblage dudit accumulateur

(30) Priorität: 21.02.2001 DE 20103015 U; 21.02.2001 DE 10108121
(43) Veröffentlichungstag der Anmeldung: 04.09.2002
(73) Patentinhaber: ROBERT BOSCH GMBH, 70442 Stuttgart (DE)
(72) Erfinder: Schepp, Rene, 71336 Waiblingen (DE); Schaefer, Ernst-Dieter, 74336 Brackenheim (DE); Zimmermann, Peter, 74360 Ilsfeld (DE)
(74) Vertreter: Grosse, Rainer, Dipl.-Ing.

(56) Entgegenhaltungen:
- EP-A- 0 256 240
- EP-A- 0 907 030
- DE-U- 8 700 456
- US-A- 4 903 734

## Beschreibung

Die Erfindung betrifft einen Druckmittelspeicher, insbesondere für eine hydraulische Bremsanlage eines Fahrzeugs, gemäß dem Oberbegriff des Anspruchs 1. Ferner betrifft die Erfindung ein Verfahren zum Montieren eines insbesondere gattungsgemäßen Druckmittelspeichers, entsprechend dem Oberbegriff des Anspruchs 14.

### Stand der Technik

Druckmittelspeicher (Kolbenspeicher mit Medientrennung) der eingangs genannten Art sind bekannt. Sie sind derart aufgebaut, dass nach komplett montiertem Druckmittelspeicher die Kompressionsmittelkammer unter Einsatz einer Befülleinrichtung mit einem Kompressionsmittel befüllt werden kann. Nachteilhafterweise sind derartige Druckmittelspeicher durch eine verhältnismäßig große Baulänge und insbesondere durch eine Mehrzahl an notwendigen Abstützbereichen zwischen Kolben und Gehäuse gekennzeichnet.

Aus der DE 87 00 456 U ist ein Druckmittelspeicher der eingangs genannten Art bekannt, der vor seiner Inbetriebnahme mit einem Druckgas aufgeladen wird. Dabei dringt das Gas durch einen Ringspalt zwischen dem Kolben und dem Gehäuse bis zu einem Dichtelement vor, das durch den Druck verformt wird und einen Kanal zur Kompressionsmittelkammer freigibt. Sobald in der Kompressionsmittelkammer der gleiche Druck wie in der Druckgasquelle herrscht kehrt die Dichtung in Ruhelage zurück und dichtet die Kammer ab. Der bekannte Druckmittelspeicher gestattet jedoch weder eine Evakuierung der Kammer noch die Einstellung eines genauen Drucks in derselben und birgt die Gefahr, dass die Dichtwirkung der Dichdung beeinträchtigt wird.

### Vorteile der Erfindung

Der erfindungsgemäße Druckmittelspeicher erlaubt vorteilhafterweise eine handhabungsfreundliche, schnelle und korrekte Evakuierung der Kompressionsmittelkammer und eine anschließende Befüllung derselben mit einem Kompressionsmittel bereits während der Montage des Druckmittelspeichers bei gleichzeitiger kompakter Bauweise desselben. Insbesondere kann der Kolben in eine Betriebsposition gebracht werden, in welcher keine zusätzlichen Bauräume oder Bereiche zum Befüllen der Kompressionsmittelkammer mit einem Kompressionsmittel vorgesehen sein müssen. Das Abdichtsystem kann verhältnismäßig unkompliziert ausgebildet sein, da das Dichtelement lediglich eine übliche Abdichtposition einzunehmen hat, während gleichzeitig die Zugangsöffnung zum Evakuieren und anschließendem Befüllen der Kompressionsmittelkammer mit einem Kompressionsmittel mit selbiger in Wirkverbindung steht, so dass das Dichtelement keine spezielle zusätzliche Befüllfunktion gewährleisten muss. Ein solcher Druckmittelspeicher ist besonders montagefreundlich ausbildbar.

Mit Vorteil sind zwei voneinander beabstandete Dichtelemente zwischen dem Gehäuse und dem Kolben angeordnet unter Ausbildung einer Entlüftungszone, in welcher nach Einnahme der Betriebsposition des Kolbens die Zugangsöffnung angeordnet ist. Eine derartige Entlüftungszone erlaubt bei einem gegebenenfalls leckendem Dichtelement, dass das Kompressionsmittel aus der Kompressionsmittelkammer durch die Entlüftungszone und die an selbige angrenzende Zugangsöffnung nach außen (Atmosphäre) auch nach Einnahme der Betriebsposition des Kolbens entweichen kann.

Vorzugsweise sind die zwei Dichtelemente jeweils als geschlossener Ring ausgebildet, wobei ein erstes Dichtelement nahe einem in die Kompressionsmittelkammer ragenden Ende des Kolbens angeordnet ist und einen kleineren Außendurchmesser als das zweite Dichtelement aufweist. Dies ermöglicht, das zweite Dichtelement während der Montage des Druckmittelspeichers und vor Anordnung des Kolbens in eine Betriebsposition in eine Abdichtposition zu bringen, während das erste Dichtelement in einem geeigneten Sitz des Kolbens lediglich vormontiert sein kann unter Freigabe eines Entlüftungskanals zwischen Kolben und Gehäuse, wobei der Entlüftungskanal die Zugangsöffnung des Gehäuses mit der Kompressionsmittelkammer wirkverbindet. Das Gehäuse kann derart ausgebildet sein, dass das erste Dichtelement erst bei Einnahme der Betriebsposition des Kolbens mit dem Gehäuse in Abdichtungskontakt tritt.

Entsprechend einer bevorzugten Ausführungsform ist innerhalb der Entlüftungszone ein an einem Axialanschlag des Gehäuses und an dem zweiten Dichtelement anliegendes Stützelement angeordnet, das eine Entlüftungsnut aufweist, welche die Zugangsöffnung mit dem ersten Dichtelement wirkverbindet. Ein derartiges Stützelement, das ebenfalls als geschlossener Ring ausgebildet sein kann, erlaubt eine schnelle und korrekte Bewegung des Kolbens in eine Betriebsposition, wobei gleichzeitig aufgrund der Entlüftungsnut des Stützelements ein Entweichen des Kompressionsmittels (Gas) aus der Kompressionsmittelkammer, zum Beispiel bei leckendem ersten Dichtelement, durch die Zugangsöffnung nach außen (Atmosphäre) möglich ist. Dabei kann das Stützelement auch eine Mehrzahl an Entlüftungsnuten aufweisen.

Mit Vorteil steht das zweite Dichtelement mit einem Halteelement in Anlagekontakt, wobei das Halteelement eine Anschlagfläche für das von der Kompressionsmittelkammer abgewandte Ende des Kolbens und eine Führungsfläche für eine entsprechende Innenfläche des Gehäuses aufweist. Hierdurch wird gegebenenfalls unter Heranziehung weiterer geeigneter Hilfsmittel eine montagefreundliche Positionierung einer vormontierten Baugruppe, bestehend aus Kolben, erstem und zweiten Dichtelement, Stützelement und Halteelement, in eine Evakuierungs- und Befüllungsposition sowie anschließend in eine endgültige Betriebsposition ermöglicht.

Die mit dem Halteelement in Wirkkontakt stehende Innenfläche des Gehäuses weist mit Vorteil endseitig einen in Bezug auf den maximalen Außendurchmesser des Halteelements größeren Führungsdurchmesser und einen geringfügig unter Ausbildung einer Pressverbindung kleineren Aufnahmedurchmesser auf. Dies gewährleistet eine handhabungsfreundliche und korrekte Montage des Druckmittelspeichers. Dabei stellt sich bei Ausbildung einer Pressverbindung (Reibschluss) zwischen Halteelement und Innenfläche des Gehäuses auch eine abdichtende Wirkverbindung zwischen dem zweitem Dichtelement und der Innenfläche des Gehäuses ein.

Vorzugsweise sind das Gehäuse und der Kolben im Wesentlichen als Zylinder ausgebildet. Dabei kann das Gehäuse unter Ausbildung eines Axialanschlags eine Schulter aufweisen. Ein derartiges Gehäuse und ein entsprechender Kolben sind fertigungstechnisch verhältnismäßig einfach herstellbar.

Entsprechend einer alternativen Ausführungsform steht das Halteelement mit einem äußeren Trägerelement in Wirkkontakt. Dabei kann das Trägerelement ein Anschlussgewinde aufweisen. Ein derartiges Trägerelement dient insbesondere zur kontrollierbaren und handhabungsfreundlichen Positionierung einer vormontierten Baugruppe, bestehend aus Kolben, erstem und zweitem Dichtelement, Stützelement und Halteelement, im Gehäuse.

Mit Vorteil steht das Trägerelement mit dem Halteelement in geometrischem Wirkkontakt, insbesondere unter Ausbildung eines Absatzes, und weist eine mit dem Gehäuse in Anschlagkontakt stehende Anschlagfläche auf. Ein derartig ausgebildetes Trägerelement ermöglicht eine stabile und positionsgenaue Montage des Druckmittelspeichers.

Vorteilhafterweise sind das Gehäuse und das Trägerelement nach abgeschlossener Montage des Druckmittelspeichers im Bereich der Anschlagfläche miteinander verschweißt. Das Trägerelement weist somit nicht nur eine Montagehilfsfunktion auf, sondern ist ein konstruktiver Bestandteil des Druckmittelspeichers.

Entsprechend einer bevorzugten Ausführungsform ist das Halteelement aus einem Kunststoff oder aus einem Metall, insbesondere aus Aluminium oder Stahl, und das Stützelement aus einem insbesondere mit Kohlefasern verstärktem PTFE-Werkstoff hergestellt.

Die Erfindung bezieht sich ferner auf ein Verfahren zum Montieren eines Druckmittelspeichers, wobei das Verfahren dadurch gekennzeichnet ist, dass eine Kompressionsmittelkammer während der Montage des Druckmittelspeichers und vor Anordnung eines Kolbens in eine Betriebsposition mittels einer geeigneten und mit einer Zugangsöffnung des Gehäuses des Druckmittelspeichers wirkverbundenen Hilfseinrichtung mit einem Kompressionsmittel befüllt wird. Mittels eines derartigen Verfahrens lassen sich die in Bezug auf den Druckmittelspeicher vorerwähnten Vorteile erzielen.

Vorteilhafterweise wird die Kompressionsmittelkammer vor der Befüllung mit einem Kompressionsmittel und während der Montage des Druckmittelspeichers und vor Anordnung des Kolbens in eine Betriebsposition mittels eines geeigneten und mit einer Zugangsöffnung des Gehäuses des Druckmittelspeichers wirkverbundenen Hilfseinrichtung evakuiert. Dabei nimmt während der Evakuierung und/oder Befüllung der Kompressionsmittelkammer mindestens ein zur Abdichtung derselben vorgesehenes Dichtelement eine Abdichtposition ein. Ein derartiges Verfahren ist besonders zur schnellen und zuverlässigen Montage eines entsprechend ausgebildeten Druckmittelspeichers geeignet.

Nach Abschluss der Befüllung der Kompressionsmittelkammer wird der Kolben zusammen mit dem Dichtelement, einem weiteren Dichtelement, einem Stützelement und gegebenenfalls mit einem Trägerelement in eine Betriebsposition gebracht. Hierbei wird unter Betriebsposition eine Stellung verstanden, in welcher der Montagevorgang des Druckmittelspeichers als abgeschlossen angesehen werden kann.

Vorzugsweise wird bei der Bewegung des Kolbens in seine Betriebsposition der Speicherdruck in der Kompressionsmittelkammer nahezu konstant gehalten.

Weitere vorteilhafte Ausgestaltungen der Erfindung ergeben sich aus der Beschreibung.

### Zeichnungen

Die Erfindung wird nachfolgend in mehreren Ausführungsbeispielen anhand zugehöriger Zeichnungen näher erläutert. Es zeigen:
- Figur 1: eine schematische, längsgeschnittene Darstellung eines Druckmittelspeichers gemäß einer ersten Ausführungsform und mit einem Kolben in Befüllungsstellung;
- Figur 2: eine schematische, längsgeschnittene Darstellung des Druckmittelspeichers der Figur 1 und mit Kolben in Betriebsposition;
- Figur 3: eine schematische, längsgeschnittene Darstellung eines Druckmittelspeichers entsprechend einer zweiten, alternativen Ausführungsform und mit Kolben in Befüllungsstellung und
- Figur 4: eine schematische, längsgeschnittene Darstellung des Druckmittelspeichers der Figur 3 und mit Kolben in Betriebsposition.

### Beschreibung der Erfindung

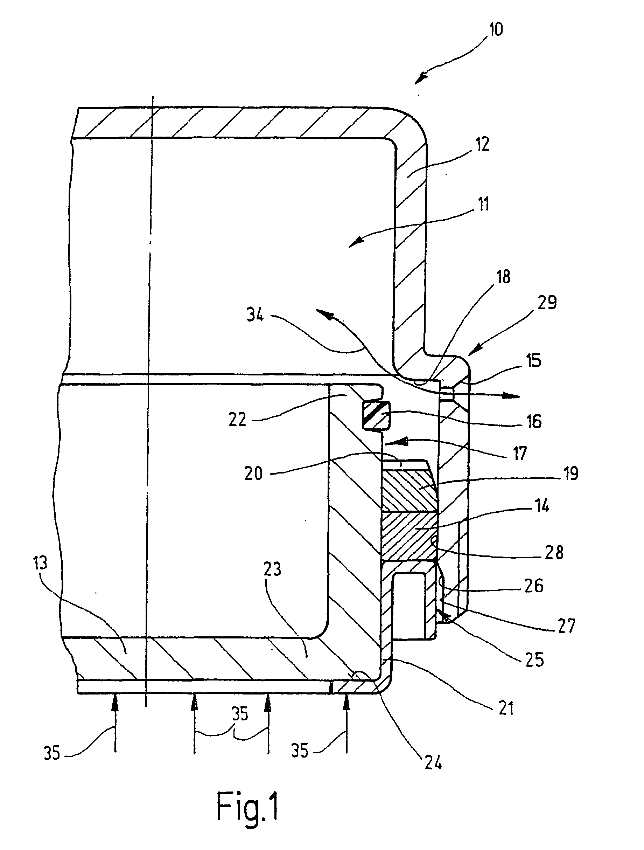

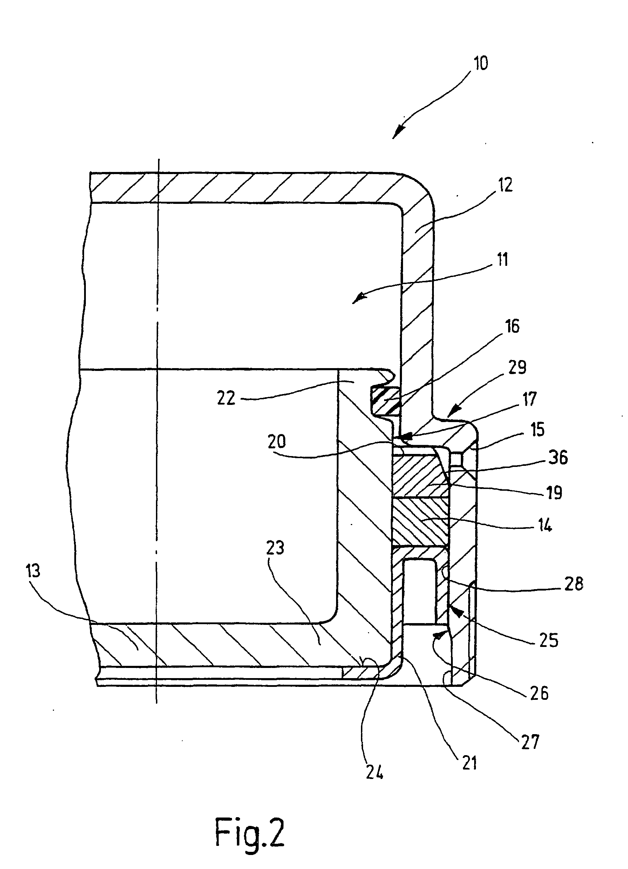

Die Figuren 1 und 2 zeigen eine erste Ausführungsform eines allgemein mit 10 bezeichneten Druckmittelspeichers, der insbesondere für eine hydraulische Bremsanlage eines Fahrzeugs (nicht dargestellt) vorgesehen ist. Dabei zeigt Figur 1 den Druckmittelspeicher 10 in einer Befüllungsstellung, während derselbe Druckmittelspeicher 10 in Figur 2 in Betriebsposition dargestellt ist. Ein derartiger Druckmittelspeicher 10 dient zur Medientrennung und weist eine Kompressionsmittelkammer 11 auf, die durch ein äußeres Gehäuse 12 und durch einen in selbigem längsverschiebbaren Kolben 13 begrenzt ist. Zur Abdichtung der Kompressionsmittelkammer 11 sind zwischen dem Gehäuse 12 und dem Kolben 13 zwei als geschlossene Ringe ausgebildete Dichtelemente 14, 16 zueinander beabstandet angeordnet unter Ausbildung einer Entlüftungszone 17. Das Dichtelement 16 (erstes Dichtelement) ist nahe einem in die Kompressionsmittelkammer 11 ragenden Ende 22 des Kolbens 13 angeordnet und weist einen kleineren Außendurchmesser als das zweite Dichtelement 14 auf. Innerhalb der Entlüftungszone 17 ist ein ebenfalls als geschlossener Ring ausgebildetes Stützelement 19 angeordnet, welches in Betriebsposition des Kolbens 13 (siehe Figur 2) an einem Axialanschlag 18 des Gehäuses 12 und gleichzeitig an dem zweiten Dichtelement 14 anliegt. Das Stützelement 19 weist mindestens eine Entlüftungsnut 20 auf, welche die Zugangsöffnung 15 mit dem ersten Dichtelement 16 wirkverbindet. Das zweite Dichtelement 14 steht mit einem Halteelement 21 in Anlagekontakt, das eine Anschlagfläche 24 für das von der Kompressionsmittelkammer 11 abgewandte Ende 23 des Kolbens 13 und eine Führungsfläche 25 für eine entsprechende Innenfläche 26 des Gehäuses 12 aufweist. Auch das Halteelement 21 ist als geschlossener Ring ausgebildet. Die mit dem Halteelement 21 in Wirkkontakt stehende Innenfläche 26 des Gehäuses 12 weist endseitig einen in Bezug auf den maximalen Außendurchmesser des Halteelements 21 größeren Führungsdurchmesser 27 und einen geringfügig unter Ausbildung einer Pressverbindung kleineren Aufnahmedurchmesser 28 auf. Das Gehäuse 12 und der Kolben 13 sind jeweils im Wesentlichen als Zylinder ausgebildet, wobei der Axialanschlag 18 des Gehäuses 12 in Form einer Schulter 29 ausgebildet ist.

Der Druckmittelspeicher 10 gemäß Figuren 1 und 2 kann vorteilhafterweise derart montiert werden, dass eine vormontierte Baugruppe, bestehend aus Kolben 13, erstem Dichtelement 16, zweitem Dichtelement 14, Stützelement 19 und Halteelement 21, gegebenenfalls mittels einer geeigneten Hilfseinrichtung (nicht dargestellt) gemäß Pfeilen 35 in das Gehäuse 12 eingeschoben wird bis zur Einnahme einer Befüllungsstellung (siehe Figur 1), in welcher das zweite Dichtelement 14 derart zwischen dem Kolben 13 und dem Gehäuse 12 angeordnet ist, dass eine umfangsförmige Abdichtung gewährleistet ist, und in welcher gleichzeitig die Zugangsöffnung 15 mit der Kompressionsmittelkammer 11 unter Ausbildung eines Belüftungskanals (siehe Doppelpfeil 34) in Wirkverbindung steht. In dieser Befüllungsstellung wird die erwähnte Baugruppe gegebenenfalls durch ein geeignetes Hilfsmittel (nicht dargestellt) gehalten. Es kann nun mittels weiterer, nicht dargestellter, externer Hilfseinrichtungen, welche von außen an die Zugangsöffnung 15 angeschlossen sind, zunächst eine Evakuierung der Kompressionsmittelkammer 11 gemäß Pfeil 34 (in Figur 1 nach rechts) erfolgen, um anschließend dieselbe Kompressionsmittelkammer 11 mit einem Kompressionsmittel (zum Beispiel ein Gas) gemäß Pfeil 34 (in Figur 1 nach links) zu befüllen. Nach abgeschlossener Befüllung der Kompressionsmittelkammer wird die erwähnte Baugruppe entsprechend Pfeilen 35 (siehe Figur 1) in ihre vorgesehene Betriebsposition bewegt (siehe Figur 2), in welcher sowohl das erste Dichtelement als auch das zweite Dichtelement eine abdichtende Betriebsstellung einnehmen und das Halteelement 21 mit der Innenfläche 26 des Gehäuses 12 im Bereich des Aufnahmedurchmessers 28 eine Pressverbindung eingeht. Die Betriebsposition des Kolbens 13 gemäß Figur 2 ist dadurch definiert, dass das Stützelement 19 gegen den Axialanschlag 18 des Gehäuses 12 (siehe auch Figur 1) anschlägt. Bei der Bewegung des Kolbens 13 in seine Betriebsposition kann gegebenenfalls der Speicherdruck in der Kompressionsmittelkarnmer 11 nahezu konstant gehalten werden. Ein derart ausgebildeter Druckmittelspeicher 10 erlaubt somit vorteilhafterweise eine schnelle, handhabungsfreundliche und korrekte Montage bei gleichzeitig kompakter Bauweise desselben.

Nach Einnahme der Betriebsposition des Kolbens 13 steht die Zugangsöffnung 15 aufgrund der vorzugsweise umfangsförmig gleichmäßig verteilten Mehrzahl an Entlüftungsnuten 20 des Stützelements 19 mit dem ersten Dichtelement 16 in Wirkkontakt. Das Stützelement 19 weist hierzu vorteilhafterweise eine umlaufende Phase 36 auf, mittels welcher eine nicht erwünschte Abdeckung der Zugangsöffnung 15 durch das Stützelement 19 verhindert wird. Für den Fall, dass das erste Dichtelement 16 lecken, das heißt nicht vollständig abdichten sollte, wird das Kompressionsmittel (Gas) der Kompressionsmittelkammer 11 durch den Freiraum zwischen Kolben 13, Gehäuse 12 und Stützelement 19 zur Zugangsöffnung 15 geleitet, von welcher es nach außen in die Atmosphäre dringen kann.

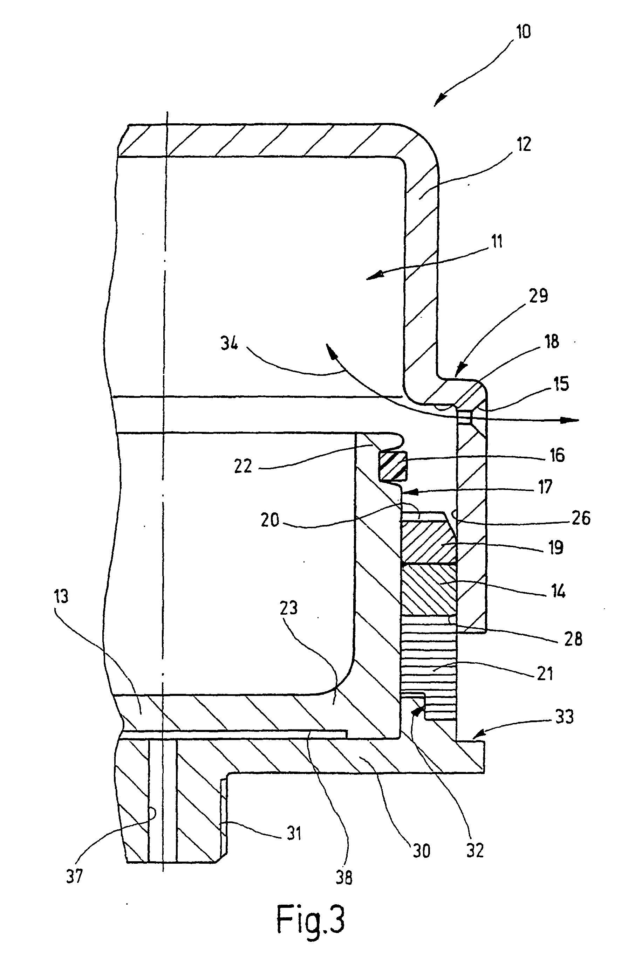

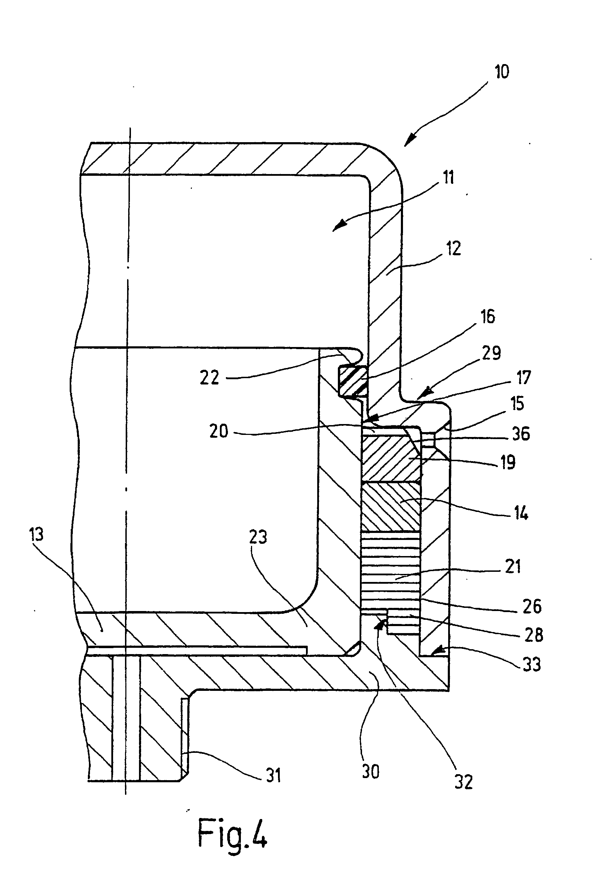

Die Figuren 3 und 4 zeigen eine zweite, alternative Ausführungsform eines Druckmittelspeichers 10, welcher einen ähnlichen konstruktiven Aufbau und Funktionsweise wie der Druckmittelspeicher gemäß Figuren 1 und 2 aufweist, so dass lediglich auf die Unterschiede zur ersten Ausführungsform eingegangen wird. Dabei sind gleichartige Bauteile mit einander entsprechenden Bezugszeichen versehen.

Der Druckmittelspeicher 10 gemäß Figuren 3 und 4 weist ein Halteelement 21 auf, das mit einem äußeren Trägerelement 30 in Wirkkontakt steht. Das Trägerelement 30 enthält ein Anschlussgewinde 31, an welches ein weiteres, nicht dargestelltes Funktionselement angeschlossen werden kann. Das Anschlussgewinde 31 ist als Außengewinde ausgebildet. Das Trägerelement 30 steht mit dem Halteelement 21 in geometrischem Wirkkontakt unter Verbindung zweier sich komplementär ergänzender Absätze 32, welche eine korrekte und handhabungsfreundliche Positionierung des Trägerelements 30 in Bezug auf das Halteelement 21 und den Kolben 13 gewährleisten. Gegebenenfalls können die Absätze 32 derart ausgebildet sein, dass eine reibschlüssige Verbindung zwischen Trägerelement 30, Halteelement 21 und Kolben 13 herstellbar ist. In dieser Weise ist eine montagefreundliche Vormontage einer Baugruppe, bestehend aus Kolben 13, erstem und zweitem Dichtelement 16, 14, Stützelement 19, Halteelement 21 und Trägerelement 30 möglich. Das Trägerelement 30 weist ferner eine mit dem Gehäuse 12 in Anschlagkontakt bringbare Anschlagfläche 33 auf. Gegebenenfalls können das Gehäuse 12 und das Trägerelement 30 nach abgeschlossener Montage des Druckmittelspeichers 10 (siehe Figur 4) im Bereich der Anschlagfläche 33 miteinander verschweißt werden. Als geeignetes Schweißverfahren kann hierzu ein abdichtendes Reibschweißverfahren verwandt werden. Bei diesem zweiten Ausführungsbeispiel weist das Halteelement 21 lediglich eine Führungs- beziehungsweise Haltefunktion unter Ausbildung einer Pressverbindung (Reibschluss) mit der Innenfläche 26 des Gehäuses 12 auf. Das von der Kompressionsmittelkammer 11 abgewandte Ende 23 des Kolbens 13 wird hier durch einen entsprechend ausgebildeten Aufnahmesitz des Trägerelements 30 aufgenommen. Das Trägerelement 30 weist eine zentrale und in Längsrichtung sich erstreckende Durchgangsbohrung 37 auf, welche zu einer Kammer 38 führt, die durch den Kolben 13 und das Trägerelement 30 begrenzt wird.

Der weitere konstruktive Aufbau und die Funktionsweise des Druckmittelspeichers 10 gemäß Figuren 1 bis 4 ist an sich bekannt und wird deshalb nicht zusätzlich im Detail beschrieben.

## Patentansprüche

1. Druckmittelspeicher (10) , insbesondere für eine hydraulische Bremsanlage eines Fahrzeugs, mit einer Kompressionsmittelkammer (11), die durch ein äußeres Gehäuse (12) und einen in selbigem verschiebbaren Kolben (13) begrenzt ist, wobei zur Abdichtung der Kompressionsmittelkammer (11) zwischen dem Gehäuse (12) und dem Kolben (13) ein erstes Dichtelement (16) und ein zweites Dichtelement (14) im Abstand voneinander angeordnet sind, wobei das Gehäuse (12) eine Zugangsöffnung (15) zur Beaufschlagung der Kompressionsmittelkammer (11) mit einem Kompressionsmittel aufweist, die mit der Kompressionsmittelkammer (11) in Wirkverbindung bringbar ist, wobei das zweite Dichtelement (14) eine Abdichtposition einnimmt und das erste Dichtelement (16) eine Kompressionsmittelpassage zwischen Kolben (13) und Gehäuse (12) freigibt, und wobei das erste Dichtelement (16) nach der Beaufschlagung der Kompressionsmittelkammer (11) mit dem Kompressionsmittel in Abdichtungskontakt mit dem Gehäuse (12) tritt, **dadurch gekennzeichnet, dass** die Zugangsöffnung (15) während der Montage des Druckmittelspeichers (10) und vor einem Bewegen des Kolbens (13) in eine Betriebsposition mit der Kompressionsmittelkammer (11) in Wirkverbindung bringbar ist, wobei sich das erste Dichtelement, (16) nicht im Kontakt mit dem Gehäuse (12) befindet, und wobei das erste Dichtelement (16) durch Bewegen des Kolbens (13) in seine Betriebsposition in Abdichtungskontakt mit dem Gehäuse (12) bewegbar ist.

2. Druckmittelspeicher nach Anspruch 1, **dadurch gekennzeichnet, dass** die zwei Dichtelemente (14,16) eine Entlüftungszone (17) ausbilden, in welcher nach Einnahme der Betriebsposition des Kolbens (13) die Zugangsöffnung (15) angeordnet ist.

3. Druckmittelspeicher nach einem der vorhergehenden Ansprüche, **dadurch gekennzeichnet, dass** die zwei Dichtelemente (14, 16) jeweils als geschlossener Ring ausgebildet sind und ein erstes Dichtelement (16) nahe einem in die Kompressionsmittelkammer (11) ragenden Ende (22) des Kolbens (13) angeordnet ist und einen kleineren Außendurchmesser als das zweite Dichtelement (14) aufweist.

4. Druckmittelspeicher nach Anspruch 2 oder 3, **dadurch gekennzeichnet, dass** innerhalb der Entlüftungszone (17) ein an einem Axialanschlag (18) des Gehäuses (12) und an dem zweiten Dichtelement (14) anliegendes Stützelement (19) angeordnet ist, das eine Entlüftungsnut (20) aufweist, welche die Zugangsöffnung (15) mit dem ersten Dichtelement (16) wirkverbindet.

5. Druckmittelspeicher nach einem der vorhergehenden Ansprüche, **dadurch gekennzeichnet, dass** das zweite Dichtelement (14) mit einem Halteelement (21) in Anlagekontakt steht, wobei das Halteelement (21) eine Anschlagfläche (24) für das von der Kompressionsmittelkammer (11) abgewandte Ende (23) des Kolbens (13) und eine Führungsfläche (20) für eine entsprechende Innenfläche (26) des Gehäuses (12) aufweist.

6. Druckmittelspeicher nach Anspruch 5, **dadurch gekennzeichnet, dass** die mit dem Halteelement (21) in Wirkkontakt stehende Innenfläche (26) des Gehäuses (12) endseitig einen in Bezug auf den maximalen Außendurchmesser des Halteelements (21) größeren Führungsdurchmesser (27) und einen geringfügig unter Ausbildung einer Pressverbindung kleineren Aufnahmedurchmesser (28) aufweist.

7. Druckmittelspeicher nach einem der vorhergehenden Ansprüche, **dadurch gekennzeichnet, dass** das Gehäuse (12), und der Kolben (13) im Wesentlichen als Zylinder ausgebildet sind.

8. Druckmittelspeicher nach einem der Ansprüche 4 bis 7, **dadurch gekennzeichnet, dass** der Axialanschlag (18) des Gehäuses (12) in Form einer Schulter (29) ausgebildet ist.

9. Druckmittelspeicher nach einem der Ansprüche 5 bis **8, dadurch gekennzeichnet, dass** das Haltelelement (21) mit einem äußeren Trägerelement (30) in Wirkkontakt steht.

10. Druckmittelspeicher nach Anspruch 9, **dadurch gekennzeichnet, dass** das Trägerelement (30) ein Anschlussgewinde (31) aufweist.

11. Druckmittelspeicher nach Anspruch 9 oder 10, **dadurch gekennzeichnet, dass** das Trägerelement (30) mit dem Halteelement (21) in geometrischem Wirkkontakt, insbesondere unter Ausbildung eines Absatzes (32), steht und eine mit dem Gehäuse (12) in Anschlagkontakt stehende Anschlagfläche (33) aufweist.

12. Druckmittelspeicher nach Anspruch 11, **dadurch gekennzeichnet, dass** das Gehäuse (12) und das Trägerelement (30) nach abgeschlossener Montage des Druckmittelspeichers (10) im Bereich der Anschlagfläche (33) miteinander verschweißt sind.

13. Druckmittelspeicher nach einem der Ansprüche 5 bis 12, **dadurch gekennzeichnet, dass** das Halteelement (21) aus einem Kunststoff oder aus einem Metall, insbesondere aus Aluminium oder Stahl, und das Stützelement (19) aus einem insbesondere aus Kohlefasern verstärkten PTFE-Werkstoff hergestellt ist.

14. Verfahren zum Montieren eines Druckmittelspeichers (10) mit einer Kompressionsmittelkammer (11), die durch ein äußeres Gehäuse (12) und einen in selbigem verschiebbaren Kolben (13) begrenzt ist, wobei zur Abdichtung der Kompressionsmittelkammer (11) zwischen dem Gehäuse (12) und dem Kolben (13) ein erstes Dichtelement (16) und ein zweites Dichtelement 14) im Abstand voneinander angeordnet sind, insbesondere nach einem der vorangehenden Ansprüche, bei welchem Verfahren die Kompressionsmittelkammer (11) während der Montage des Druckmittelspeichers (10) mittels einer geeigneten und mit einer Zugangsöffnung (15) des Gehäuses (12) wirkverbundenen Hilfseinrichtung mit einem Kompressionsmittel befüllt wird, wobei das zweite Dichtelement (14) eine Abdichtposition einnimmt, **dadurch gekennzeichnet, dass** sich das erste Dichtelement (16) dabei nicht im Kontakt mit dem Gehäuse (12) befindet und nach der Befüllung der Kompressionsmittelkammer (11) durch Bewegen des Kolbens (13) in seine Betriebsposition in Abdichtungskontakt mit dem Gehäuse (12) bewegt wird.

15. Verfahren nach Anspruch 14, **dadurch gekennzeichnet, dass** die Kompressionsmittelkammer (11) vor der Befüllung mit einem Kompressionsmittel und während der Montage des Druckmittelspeichers (10) und vor den Bewegen des Kolbens (13) in die Betriebsposition mittels einer geeigneten und mit einer Zugangsöffnung (15) eines Gehäuses (12) des Druckmittelspeichers (10) wirkverbundenen Hilfseinrichtung evakuiert wird.

16. Verfahren nach Anspruch 14 oder 15, **dadurch gekennzeichnet, dass** während der Evakuierung und/oder Befüllung mindestens ein zur Abdichtung der Kompressionsmittelkammer (11) vorgesehenes Dichtelement (14) eine Abdichtposition einnimmt.

17. Verfahren nach Anspruch 16, **dadurch gekennzeichnet, dass** nach Abschluss der Befüllung der Kompressionsmittelkammer (11) der Kolben (13) zusammen mit dem Dichtelement (14), einem weiteren Dichtelement (16), einem Stützelement (19) und gegebenenfalls mit einem Trägerelement (30) in eine Betriebsposition gebracht wird.

18. Verfahren nach einem der Ansprüche 14 bis 17, **dadurch gekennzeichnet, dass** bei der Bewegung des Kolbens (13) in seine Betriebsposition ein Speichervolumen der Kompressionsmittelkammer (11) nahezu konstant gehalten wird.

## Claims

1. Fluid pressure accumulator (10) in particular for a hydraulic brake system of a vehicle with a compression fluid chamber (11) constrained between an outer casing (12) and a piston (13) moving inside the latter where for insulating the compression fluid chamber (11) between the casing (12) and the piston (13) a first seal (16) and a second seal (14) are placed at a distance to each other whereby the casing (12) has an access aperture (15) for applying a compression fluid to the compression fluid chamber (11) which can be brought into active contact with the compression fluid chamber (11) whereby the second seal (14) assumes an insulating position and the first seal (16) enabling a compression fluid passage between piston (13) and casing (12) and whereby the first seal (16) enters into insulating contact with the casing (12) after applying the compression fluid to the compression fluid chamber (11), **characterised in that** the access aperture (15) during assembly of the fluid pressure accumulator (10) and prior to any moving of the piston (13) can be brought into an operating position with the compression fluid chamber (11) in active connection whereby the first seal (16) is not in contact with the casing (12) and whereby the first seal (16) can be moved by moving the piston (13) into its operating position in insulating contact with the casing (12).

2. Fluid pressure accumulator according to claim 1 **characterised in that** the two seals (14, 16) form a ventilation zone (17) in which the access aperture (15) is placed when the piston (13) has taken up its operating position.

3. Fluid pressure accumulator according to one of the preceding claims **characterised in that** the two seals (14, 16) are each formed as a closed ring and a first seal (16) is placed near the end (22) of the piston (13) protruding into the compression fluid chamber (11) and has a smaller external diameter than the second seal (14).

4. Fluid pressure accumulator according to claim 2 or 3 **characterised in that** inside the ventilation zone (17) an adjacent support section (19), placed in contact with an axial stop (18) of the casing (12) and with a second seal (14), is provided having a ventilation channel (20) actively connecting the access aperture (15) to the first seal (16).

5. Fluid pressure accumulator according to one of the preceding claims **characterised in that** the second seal (14) is in touching contact with a retaining section (21) where the retaining section (21) has a stopping face (24) for the end (23) of the piston (13) facing away from the compression fluid chamber (11) as well as a guide surface (20) for a corresponding inner surface (26) of the casing (12).

6. Fluid pressure accumulator according to claim 5 **characterised in that** the inner surface (26) of the casing (12), actively connected to the retaining section (21), has on its one side a larger guide diameter (27) in relation to the maximum outer diameter of the retaining section (21) and a slightly smaller receptacle diameter (28) thus forming a pressure connection.

7. Fluid pressure accumulator according to one of the preceding claims **characterised in that** the casing (12) and the piston (13) are essentially shaped as cylinders.

8. Fluid pressure accumulator according to one of the claims 4 to 7 **characterised in that** the axial stop (18) of the casing (12) is shaped like a shoulder (29).

9. Fluid pressure accumulator according to one of the claims 5 to 8 **characterised in that** the retaining section (21) is in active contact with an outer rest (30).

10. Fluid pressure accumulator according to claim 9 **characterised in that** the rest (30) has a connection thread (31) on it.

11. Fluid pressure accumulator according to claim 9 or 10 **characterised in that** the rest (30) is in active geometric contact with the retaining section (21), in particular by forming a ledge (32), and has a stopping face (33) in touching contact with the casing (12).

12. Fluid pressure accumulator according to claim 11 **characterised in that** the casing (12) and the rest (30), after completed assembly of the fluid pressure accumulator (10), are welded to each other in the vicinity of the stopping face (33).

13. Fluid pressure accumulator according to one of the claims 5 to 12 **characterised in that** the retaining section (21) is made of plastic or metal, in particular aluminium or steel, and the support section (19) is made of PTFE material, in particular of carbon fibre reinforced PTFE.

14. Method for assembling a fluid pressure accumulator (10) with a compression fluid chamber (11) constrained by an outer casing (12) and a piston (13) moving inside the latter whereby for insulation of the compression fluid chamber (11) between the casing (12) and the piston (13) a first seal (16) and second seal (14) are placed at a distance to each other, in particular according to one of the preceding claims with which method the compression fluid chamber (11) during assembly of the fluid pressure accumulator (10) is filled during assembly of the fluid pressure accumulator (10) with compression fluid by means of a suitable auxiliary device actively connected to an access aperture (15) of the casing (12) where the second seal (14) assumes an insulating position **characterised in that** the first seal (16) is thereby not in contact with the casing (12) and after the filling of the compression fluid chamber (11) is moved, by the movement of the piston (13), into its operating position in insulating contact with the casing (12).

15. Method according to claim 14 **characterised in that** the compression fluid chamber (11) prior to being filled up with compression fluid and during assembly of the fluid pressure accumulator (10) and prior to movement of the piston (13) into its operating position is evacuated into the operating position by means of a suitable auxiliary device actively connected to an access aperture (15) of the casing (12) of the fluid pressure accumulator (10).

16. Method according to claim 14 or 15 **characterised in that** during evacuation and/or filling at least one seal (14) provided for insulation of the compression fluid chamber (11) assumes an insulating position.

17. Method according to claim 16 **characterised in that** after completed filling-up of the compression fluid chamber (11) the piston (13) is brought into an operating position together with a seal (14), an additional seal (16), a support section (19) and, where relevant, a rest (30).

18. Method according to one of the claims 14 to 17 **characterised in that** upon movement of the piston (13) into its operating position the accumulated volume of the compression fluid chamber (11) is held almost constant.

## Revendications

1. Réservoir de moyen de pressurisation (10), notamment pour une installation de freinage hydraulique d'un véhicule, avec une chambre de moyen de pressurisation (11) qui est limitée par un boîtier (12) extérieur et un piston (13) susceptible d'être déplacé dans ledit boîtier; un premier élément d'étanchéité (16) et un deuxième élément d'étanchéité (14) étant disposés à distance l'un par rapport à l'autre entre le boîtier (12) et le piston (13) pour assurer l'étanchéité de la chambre de moyen de pressurisation (11); le boîtier (12) présentant une ouverture d'entrée (15) pour l'introduction dans la chambre de moyen de pressurisation (11) d'un moyen de pressurisation, laquelle ouverture peut être mis en liaison effective avec la chambre de moyen de pressurisation (11); le deuxième élément d'étanchéité (14) prenant une position d'étanchéité et le premier élément d'étanchéité (16) libérant un passage de moyen pressurisation entre le piston (13) et le boîtier (12) et où le premier élément d'étanchéité (16) entre dans un contact d'étanchéité avec le boîtier (12) après l'introduction du moyen de pressurisation dans la chambre de moyen de pressurisation (11), **caractérisé en ce que** l'ouverture d'entrée (15) peut être mise en liaison effective pendant le montage du réservoir de moyen de pressurisation (10) et avant un mouvement du piston (13) vers une position de fonctionnement avec la chambre de moyen de pressurisation (11); le premier élément d'étanchéité (16) ne se trouvant pas en contact avec le boîtier (12) et le premier élément d'étanchéité (16) pouvant être amené vers sa position de fonctionnement en bougeant le piston (13) vers un contact d'étanchéité avec le boîtier (12).

2. Réservoir de moyen de pressurisation selon la revendication 1, **caractérisé en ce que** les deux éléments d'étanchéité (14, 16) forment une zone de ventilation (17) dans laquelle une ouverture d'entrée (15) est disposé après la prise de position de fonctionnement par le piston (13).

3. Réservoir de moyen de pressurisation selon une des revendications précédentes, **caractérisé en ce que** les deux éléments d'étanchéité (14, 16) sont formés chacun en tant qu'anneaux fermés et **en ce qu'**un premier élément d'étanchéité (16) est disposé à proximité d'une extrémité (22) du piston (13) dépassant dans la chambre de moyen de pressurisation (11) et présente un diamètre extérieur plus petit que le deuxième élément d'étanchéité (14).

4. Réservoir de moyen de pressurisation selon la revendication 2 ou 3, **caractérisé en ce qu'** à l'intérieur de la zone de ventilation (17), un élément d'appui (19) est disposé s'appuyant sur une butée axiale (18) du boîtier (12) et sur le deuxième élément d'étanchéité (14), lequel élément d'appui présente une rainure de ventilation (20) qui relie de façon effective l'ouverture d'entrée (15) avec le premier élément d'étanchéité (16).

5. Réservoir de moyen de pressurisation selon une des revendications précédentes, **caractérisé en ce que** le deuxième élément d'étanchéité (14) se trouve dans un contact d'appui avec un élément de maintien (21); l'élément de maintien (21) présentant une surface d'aboutement (24) pour l'extrémité (23) détournée de la chambre de moyen de pressurisation (11) du piston (13) et une surface de guidage (20) pour une surface interne (26) correspondante du boîtier (12).

6. Réservoir de moyen de pressurisation selon la revendication 5, **caractérisé en ce que** la surface interne (26) du boîtier (12) se trouvant dans un contact effectif avec l'élément de maintien (21) présente du côté de l'extrémité, un diamètre de guidage (27) plus grand par rapport au diamètre extérieur maximal de l'élément de maintien (21) et un diamètre de réception (28) légèrement plus petit en formant une liaison de pression.

7. Réservoir de moyen de pressurisation selon une des revendications précédentes, **caractérisé en ce que** le boîtier (12) et le piston (13) ont une forme essentiellement cylindrique.

8. Réservoir de moyen de pressurisation selon une des revendications 4 à 7, **caractérisé en ce que** la butée axiale (18) du boîtier (12) a la forme d'une épaule (29).

9. Réservoir de moyen de pressurisation selon une des revendications 5 à 8, **caractérisé en ce que** l'élément de maintien (21) se trouve dans une liaison effective avec un élément portant (30) extérieur.

10. Réservoir de moyen de pressurisation selon la revendication 9, **caractérisé en ce que** l'élément portant (30) présente un filetage de raccordement (31).

11. Réservoir de moyen de pressurisation selon la revendication 9 ou 10, **caractérisé en ce que** l'élément portant (30) se trouve dans un contact effectif géométrique avec l'élément de maintien (21), notamment en formant un gradin (32) et présente une surface de butée (33) se trouvant dans un contact de butée avec le boîtier (12).

12. Réservoir de moyen de pressurisation selon la revendication 11, **caractérisé en ce que** le boîtier (12) et l'élément portant (30) sont soudés l'un à l'autre après un montage terminé du réservoir de moyen de pressurisation (10) dans la zone de la surface de butée (33).

13. Réservoir de moyen de pressurisation selon une des revendications 5 à 12, **caractérisé en ce que** l'élément de maintien (21) est fabriqué d'un plastique ou d'un métal, notamment en aluminium ou en acier, et **en ce que** l'élément d'appui (19) est fabriqué dans un matériau PTFE renforcé, notamment en fibres de carbone.

14. Procédé pour monter un réservoir de moyen de pressurisation (10) avec une chambre de moyen de pressurisation (11) qui est limitée par un boîtier (12) extérieur et un piston (13) susceptible d'être déplacé dans ledit boîtier; un premier élément d'étanchéité (16) et un deuxième élément d'étanchéité (14) étant disposés à distance l'un par rapport à l'autre entre le boîtier (12) et le piston (13) pour rendre étanche la chambre de moyen de pressurisation (11), notamment selon une des revendications précédentes, dans lequel procédé, la chambre de moyen de pressurisation (11) est remplie pendant le montage du réservoir de moyen de pressurisation (10) d'un moyen de pressurisation avec un dispositif d'aide approprié et relié de façon effective avec une ouverture d'entrée (15) du boîtier (12); le deuxième élément d'étanchéité (14) prenant une position d'étanchéité, **caractérisé en ce que** le premier élément d'étanchéité (16) ne se trouve pas en contact avec le boîtier (12) et est déplacé après le remplissage de la chambre de moyen de pressurisation (11) par le mouvement du piston (13) vers sa position de fonctionnement pour être mis dans un contact d'étanchéité avec le boîtier (12).

15. Procédé selon la revendication 14, **caractérisé en ce que** la chambre de moyen de pressurisation (11) est évacuée avant le remplissage avec un moyen de pressurisation et pendant le montage du réservoir de moyen de pressurisation (10) et avant le déplacement du piston (13) vers la position de fonctionnement au moyen d'un dispositif d'aide approprié se trouvant dans une liaison effective avec une ouverture d'entrée (15) d'un boîtier (12) du réservoir de moyen de pressurisation (10).

16. Procédé selon la revendication 14 ou 15, **caractérisé en ce que** pendant l'évacuation et/ou le remplissage d'au moins un élément d'étanchéité (14), prévu pour rendre étanche la chambre de moyen de pressurisation (11), prend une position d'étanchéité.

17. Procédé selon la revendication 16, **caractérisé en ce que** le piston (13) est amené après le remplissage de la chambre de moyen de pressurisation (11) vers une position de fonctionnement, ensemble avec l'élément d'étanchéité (14), un autre élément d'étanchéité (16), un élément d'appui (19) et le cas échéant, avec un élément portant (30).

18. Procédé selon une des revendications 14 à 17, **caractérisé en ce que** lors du déplacement du piston (13) dans sa position de fonctionnement, le volume de stockage de la chambre de moyen de pressurisation (11) est maintenu presque constant.
